Europäisches Patentamt

European Patent Office

Office européen des brevets

(19)

(11) Numéro de publication: **0 061 942**

**A1**

(12) # DEMANDE DE BREVET EUROPEEN

(21) Numéro de dépôt: **82400271.1**

(22) Date de dépôt: **16.02.82**

(51) Int. Cl.³: **H 01 M 8/24**

---

(30) Priorité: **26.03.81 FR 8106116**

(43) Date de publication de la demande:
**06.10.82 Bulletin 82/40**

(84) Etats contractants désignés:
**AT BE CH DE GB IT LI NL SE**

(71) Demandeur: TRANSPORTS RECHERCHES ETUDES
GROUPEMENT D'INTERET ECONOMIQUE (T.R.E.G.I.E.)
9 & 11, avenue du 18 juin 1940
F-92500 Rueil Malmaison(FR)

(72) Inventeur: Bouthors, Pierre
25, Parc de L'Ecluse
F-78290 Croissy sur Seine(FR)

(72) Inventeur: Breting, Olivier
12, avenue du Docteur-Flament
F-95240 Cormeilles en Parisis(FR)

(74) Mandataire: Réal, Jacques et al,
Régie Nationale des Usines Renault 8-10, avenue Emile
Zola
F-92109 Boulogne Billancourt(FR)

---

(54) **Perfectionnement aux piles à combustible.**

(57) Pile à combustible comportant un empilage d'électrodes planes maintenues en position par des intercalaires, cet empilage étant constitué d'une pluralité de générateurs élémentaires formé chacun de deux électrodes en contact l'une avec un électrolyte et un premier réactif, l'autre avec ledit électrolyte et un second réactif, l'ordre des polarités des générateurs successifs étant inversé d'un générateur élémentaire au suivant, pile caractérisée par ceci que les paires d'électrodes de deux générateurs élémentaires successifs formant un générateur de base, destinées à coopérer avec un électrolyte et les deux réactifs, sont mises électriquement en parallèle et sont solidarisées par un cadre primaire commun (3) de façon à constituer un sous-ensemble indépendant, deux tels générateurs de base étant associés respectivement de part et d'autre d'un cadre intercalaire (7) qui forme avec les électrodes contiguës une chambre (35) recevant l'un des réactifs coopérant avec lesdites électrodes contiguës.

FIG.1

EP 0 061 942 A1

## Perfectionnement aux piles à combustible

La présente invention se rapporte notamment aux piles à combustible constituées d'une pluralité d'eléments générateurs électriques de base, chacun d'eux étant lui-même l'association parallèle de deux générateurs élémentaires.

On sait pour mémoire que les piles à combustible comportent habituellement, pour chacun de leurs générateurs élémentaires, deux volumes contenant respectivement combustible et comburant, lesquels sont séparés par un troisième volume rempli d'électrolyte. Les membranes planes et poreuses séparant combustible et électrolyte, ou comburant et électrolyte, sont les électrodes qui contiennent des catalyseurs appropriés, en même temps qu'elles transmettent les courants formés par la pile.

Le plus souvent ces électrodes, pour remplir ces rôles, comprennent un squelette conducteur et poreux dans lequel est inséré le catalyseur, l'ensemble présentant un réseau de capillaires où se trouvent en présence : combustible ou comburant, catalyseur spécifique et électrolyte. Il en résulte des ionisations associées à des absorptions ou libérations d'électrons selon que l'électrode est + ou -. Et le transfert de ces électrons, sous la polarisation atteinte, forme le courant extérieur utile de la pile.

Il est clair que si on associe en série, une succession de tels éléments dont les polarités sont disposées identiquement, deux éléments consécutifs se jouxteront par les compartiments contenant l'un du combustible, l'autre du comburant, et ces deux compartiments devront être séparés par une cloison étanche. Tout au contraire, si on alterne une fois sur deux l'ordre des polarités, on sait que les mêmes compartiments de combustible ou de comburant pourront baigner les électrodes en vis-à-vis des deux éléments de pile successifs.

La pile conforme à la présente invention est de la dernière sorte où les polarités des eléments de base sont alternées une fois sur deux, et dont le générateur de base est établi conformément à la technique dite du filtre presse. Ce générateur de base est caractérisé par ceci que, comprenant deux générateurs élémentaires ayant chacun deux électrodes espacées par un volume contenant un électrolyte, deux électrodes contiguës appartenant chacune à un générateur élémentaire différent étant reliées électriquement en parallèle, et les deux autres électrodes situées de part et d'autre des premières électrodes précitées étant également reliées en parallèle, ce générateur est solidarisé par un même cadre qui reçoit sur deux côtes en vis-à-vis les branchements parallèles d'électrodes, et sur les deux autres les conduits de desserte du réactif alimentant le volume central fermé que forment par leur réunion appropriée les deux électrodes situées côte à côte et appartenant respectivement à l'un et à l'autre des deux générateurs. Ce volume compris entre deux électrodes contiguës et raccordées, ayant donc même signe, n'ouvre passage qu'aux canaux spécialisés qui en desservent l'entrée et la sortie, cette sortie comprenant, éventuellement, des canaux d'assèchement pour compenser le "perlage" de l'électrolyte dans ce volume.

Dans la pile complète, les sous-ensembles que forment les générateurs de base et qui groupent deux piles ou générateurs élémentaires connectés en parallèle sont séparés par des cadres intercalaires dont le rôle est d'assurer l'ensemble des dessertes en fluide requis par la pile, c'est-à-dire électrolyte et réactifs, en même temps qu'il livre passage et supporte les connexions électriques nécessaires.

L'invention sera maintenant décrite en se référant à titre d'exemple à une forme de réalisation représentée au dessin annexé dans lequel :

- la figure 1 représente une coupe schématique en élévation de la pile, formée de deux générateurs de base, montrant la disposition des électrodes et des cadres ;

- la figure 2 représente la coupe transversale de la même pile selon un plan II-II de la figure 1 perpendiculaire au précédent selon une disposition non limitative des alimentations de la pile en fluides divers ;

- la figure 3 représente une vue schématique, en perspective d'un sous-ensemble formant générateur de base de la pile dans ces mêmes conditions ;

- la figure 4 est une vue de détail d'une partie d'un élément entretoise-intercalaire ;

- la figure 5 est une coupe partielle suivant V-V de la figure 4.

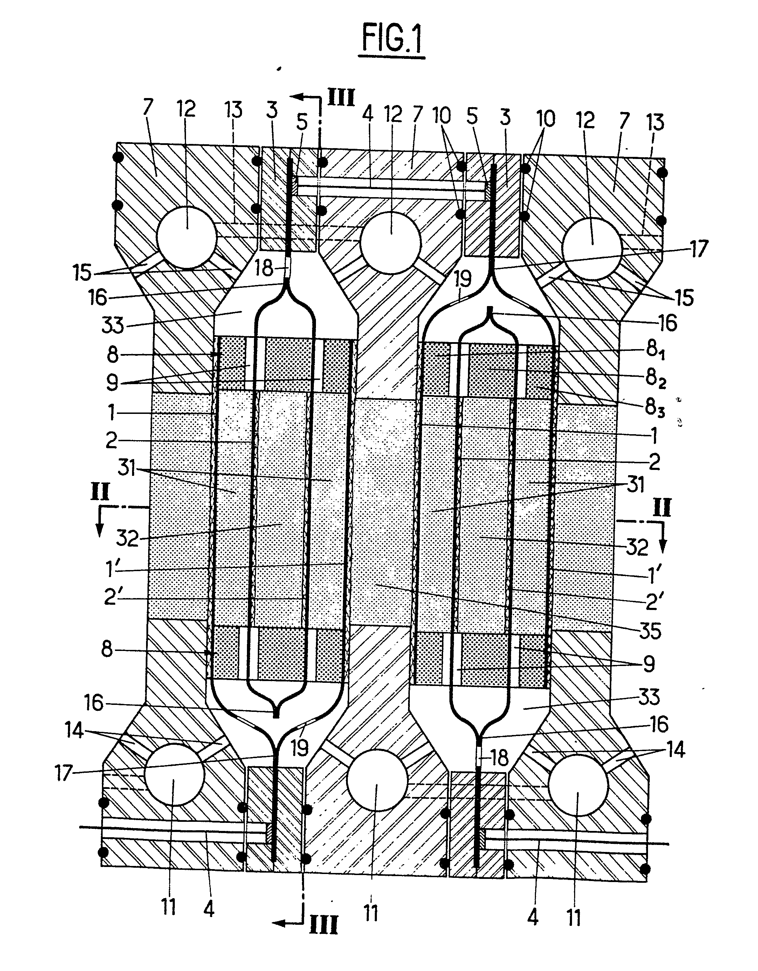

On a représenté à la figure 1 deux paires de générateurs élémentaires constitués respectivement des électrodes planes 1, 2 et 1', 2' s'étendant dans le sens de la largeur de la pile, dont les polarités sont inverties de telle sorte que les électrodes 2 et 2' contiguës, comprises entre les électrodes extérieures 1 et 1', sont de même polarité et sont réunies le long de leurs grands côtés pour former des prolongements 16 communs plans, dont l'un s'étend en hauteur dans le cadre rectangulaire de base 3 formé de deux parties symétriques accolées et qui serrent ce prolongement.

D'une façon analogue, les électrodes extérieures 1 et 1', également de même polarité, se rapprochent mais à une extrémité seulement pour former un prolongement 17, qui chevauche à cette extrémité le volume en forme de sac allongé constitué par l'ensemble des électrodes 2, 2' et qui est serré entre les deux parties du cadre 3, du côté opposé à celui dans lequel s'étend le prolongement commun 16 des électrodes 2, 2'.

Comme représenté, pour former l'ensemble, les piles sont montées tête-bêche, c'est-à-dire que d'un même côté aboutissent alternativement les prolongements 16 ou 17 des électrodes 2, 2' ou 1, 1', un cadre rectangulaire tel que 7 étant disposé entre chaque sous-ensemble ou générateur de base, ce cadre intercalaire servant d'une part à délimiter des chambres telles que 35 entre deux sous-ensembles et à recevoir des canaux 11, 12, 13 d'alimentation et de sortie pour l'électrolyte et les réactifs.

Entre les électrodes 1, 1', 2, 2' sont disposées sur toute la largeur de la pile des entretoises élastiques 8, qui maintiennent les écartements convenables entre respectivement les électrodes planes 1 et 2, 2 et 2', 2' et 1', ces entretoises, formées d'éléments séparés plans, permettant par des canaux convenables 9 la circulation des fluides. Les espaces délimités entre les électrodes forment ainsi des chambres successives 32, dans l'espace compris entre les électrodes 2 et 2', qui divise la chambre 31 en deux parties réunies d'un côté par la chambre 33 au-delà d'une entretoise 8 et par des passages 17 prévus dans le prolongement 16 des électrodes 1, 1', enfin des chambres 35 comprises entre les électrodes 1-1 des deux sous-ensembles associés et les côtés internes des cadres intercalaires.

Les différentes chambres 31, 32, 33 et 35, dans lesquelles sont disposés des intercalaires 6, sont respectivement alimentées en réactifs, comburant et combustible, et en électrolyte de la façon qui sera décrite ci-après :

L'électrolyte destiné à imprégner l'espace inter-électrodes 31 arrive par des canaux longitudinaux percés horizontalement à travers les cadres intercalaires 7, respectivement d'arrivée et de retour 11 et 12, l'arrivée s'effectuant de préférence par le bas pour éviter la formation de bulles néfastes au bon fonctionnement des circuits.

Des conduits 14 ou 15 mettent en communication les chambres d'extrémités 33 avec les canaux 11 ou 12. L'électrolyte circule ensuite à travers les entretoises 8 par des ouvertures 9.

Les canaux d'électrolyte, d'entrée 11 et de sortie 12, servent par leur longueur et leur résistance ohmique à éviter les courts-circuits excessifs entre électrodes de tension différentes. Aussi pour augmenter les longueurs de canalisations entre points de tensions différentes, est-il bon de réaliser des circuits en forme de grecque en réunissant les canalisations de deux cadres 7 successifs par des canaux 13 traversant, perpendiculairement à ces canaux 11 ou 12, les cadres 7 et les cadres 3 à l'une puis l'autre des extrémités des canaux 11 ou

12. Dans un tel cas il peut être préférable de ne desservir un générateur de base à deux paires d'électrodes que par une seule nappe de tuyères comme 14 ou 15, venant d'un même canal 11 ou 12. Ainsi, comme l'une des nappes dessert l'électrolyte d'un seul côté d'un branchement parallèle des électrodes intérieures il faut que, après leur connexion, ces électrodes présentent des orifices 18. De meme, près de leur réunion, les électrodes extérieures du générateur de base doivent être percées d'orifices comme 19.

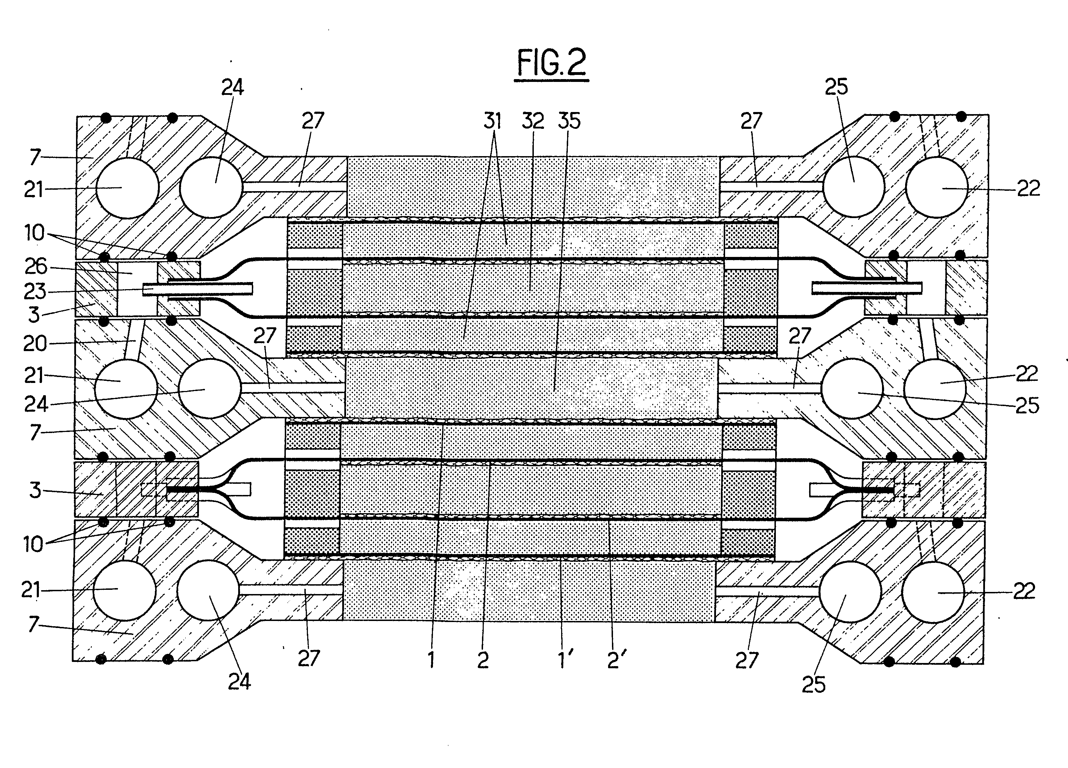

En se reportant à la figure 2, qui montre une coupe transversale selon II-II du générateur de base de la figure 1, on voit que des canaux 21-22 percés longitudinalement dans les montants latéraux des cadres intercalaires 7 alimentent en un premier réactif par des conduits 20, des alvéoles 26 dans chacune desquelles débouche un petit tube d'alimentation 23 qui s'insère de façon étanche entre les lèvres refermées des électrodes 2-2'. De mème, des canaux longitudinaux d'entrée 24 et de sortie 25 parallèles aux canaux 21 font circuler un second réactif dans les espaces 35 au moyen de conduits 27.

L'étanchéité est assurée entre les cadres 3 et 7 au moyen de joints 10 et 29 ; les joints peuvent être le prolongement des joints 10 de l'autre direction, au prix des séparations requises par barrette de joint appropriée.

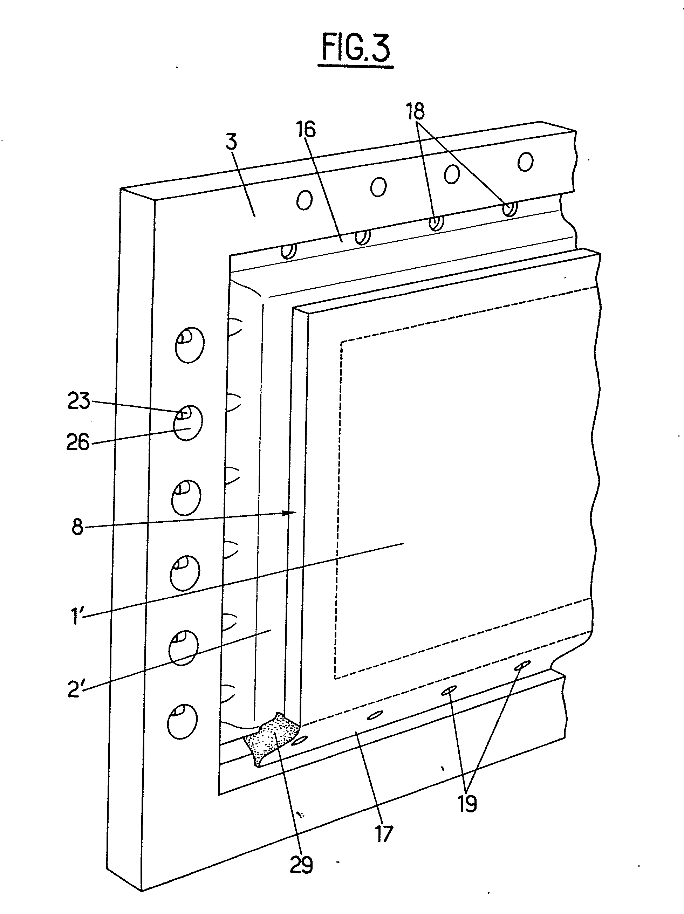

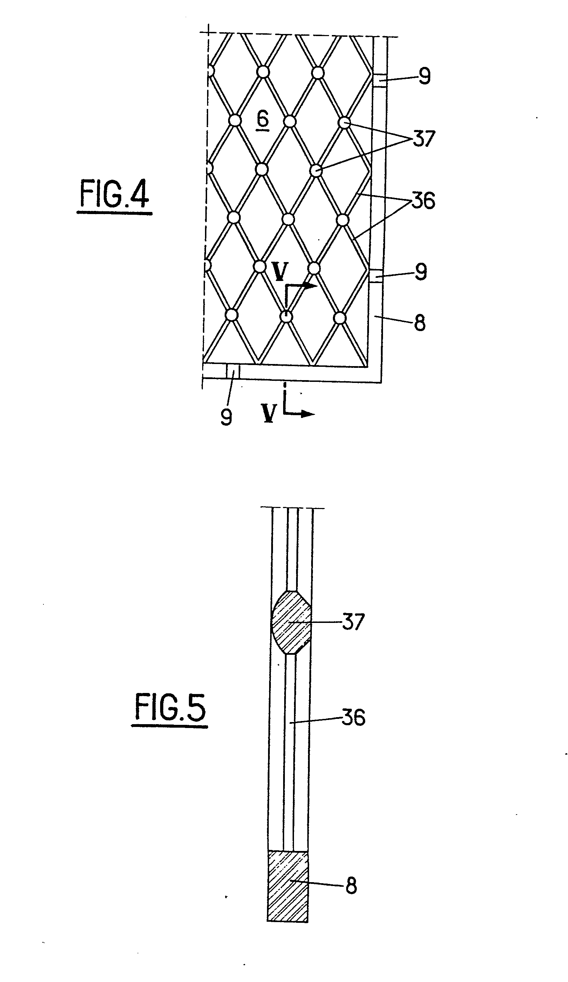

Les conditions de réalisation matérielle apparaîtront mieux à la faveur de la figure 3 qui représente une vue partielle en perspective du générateur de base et les figures 4 et 5 deux vues partielles. Celui-ci comprend deux électrodes intérieures 2 et 2' et deux électrodes extérieures 1 et 1' qui leur forment une doublure cavalière en emprisonnant les intercalaires 6 et entretoises 8 déjà décrits. Les électrodes sont notamment constituées comme souvent c'est le cas d'un squelette d'électrode métallique et conducteur permettant la collecte du courant formé, lequel support conducteur et poreux étant enduit ou revêtu de l'agrégat de catalyseur, de charbon actif, de téflon, en vue de permettre la formation de capillaires où se rencontrent produits réactifs, catalyseur et électrolyte. Les parties non planes des électrodes, difficiles à traiter de cette sorte gagnent habituellement à rester sans ces produits, il suffit de rendre étanche à ces endroits le support poreux par une enduction de mastic étanche, le mastic à base de butyl en est un exemple courant. Il faut aussi noter que, avant tout traitement, les squelettes d'électrodes 2 et 2' ont été mis en forme pour recevoir les tubes qui assureront dans le sac qu'elles forment la circulation en produit réactif. Le volume fermé qu'elles forment après réunion étanche contient, parce qu'il a été posé avant réunion, un intercalaire 6 directement relié aux entretoises 8.

Pour mieux faire comprendre la réalisation des entretoises 8 et des intercalaires 6, un exemple a été représenté aux figures 4 et 5. L'entretoise 8 se présente comme un cadre de matière élastique et étanche comportant des gorges semicirculaires 9 constituant les passages réservés à l'électrolyte ou aux réactifs. A l'intérieur du cadre est situé un treillis de tiges croisillonnées 36 présentant aux noeuds de croisement des têtes 37 ayant même épaisseur que le cadre et qui maintiennent ainsi l'écartement convenable entre les électrodes.

Dans un générateur de base, trois telles entretoisesintercalées $8_1$, $8_2$, $8_3$ sont ainsi disposées parallèlement dans les intervalles entre les électrodes.

La pièce composite comprenant l'ensemble de l'intercalaire 6 et de l'entretoise 8 peut notamment être réalisée par moulage sous pression en butyl. Les électrodes 2 et 2', formant le volume fermé ne laissant passage qu'au tube de desserte 18 de produit réactif, peuvent comme on a vu être réunies par collage ou soudure. Dans le cas du collage, il faut que certains points soient soudés pour assurer la mise en parallèle électrique et l'écoulement du courant formé par les électrodes. En regard des points où se réalise le branchement électrique d'une électrode à la suivante par les conducteurs 4, il peut être prévu au fond du perçage une pastille 5 soudée ou brasée qui protège l'électrode.

On reconnaît les trous 19 forés dans les électrodes 1, 1' pour permettre le bon écoulement de l'électrolyte. De même, on voit un des bouchons de mastic 29 qui empêchent à chaque angle de préférence, mais nécessairement à deux d'entre eux, hauts ou bas, que l'électrolyte ne soit conduit directement de l'entrée à la sortie en passant pour ce faire par le côté extérieur des électrodes 1, 1', c'est-à-dire par l'ensemble des chambres communicantes 33 constituant un by-pass entre les conduits d'entrée et de sortie. Une partie doit en être placée au montage des cadres 7 et de l'ensemble, entre électrodes extérieures 1, 1' et cadre 7.

Pour le fonctionnement, l'électrolyte usuel sera généralement la potasse, alors que les réactifs seront généralement d'un côté l'air, qui sera introduit de préférence dans les chambres 35, et de l'autre de l'hydrogène introduit dans les chambres 32. On obtiendra ainsi une polarité positive sur les électrodes extérieures 1 et négative sur les électrodes intérieure 2.

D'autres réactifs pourraient être utilisés, par exemple l'oxygène ou le chlore à la place de l'air, le méthanole, divers hydrocarbures ou l'ammonium $NH^4$ à la place de l'hydrogène. Les catalyseurs généralement utilises sont, du côté oxygène ou air, l'argent, la phtalocyanine de fer, le charbon actif, côté hydrogène le nickel, 1 Raney Nickel, éventuellement dopés au titane ou le platine.

En fonctionnement, il est avantageux d'assurer une pression prépondérante à l'électrolyte, de manière à éviter le "bullage" au passage d'un réactif dans l'électrolyte.

## REVENDICATIONS

1. Pile à combustible comportant un empilage d'électrodes planes maintenues en position par des intercalaires, cet empilage étant constitué d'une pluralité de générateurs élémentaires formé chacun de deux électrodes (1-2) en contact l'une avec un électrolyte et un premier réactif, l'autre avec ledit électrolyte et un second réactif, l'ordre des polarités des générateurs successifs étant inversé d'un générateur élémentaire au suivant, pile caractérisée par ceci que les paires d'électrodes (1-1', 2-2') de deux générateurs élémentaires successifs formant un générateur de base, destinées à coopérer avec un électrolyte et les deux réactifs, sont mises électriquement en parallèle et sont solidarisées par un cadre primaire commun (3) de façon à constituer un sous-ensemble indépendant, deux tels générateurs de base étant associés respectivement de part et d'autre d'un cadre intercalaire (7) qui forme avec les électrodes contiguës une chambre (35) recevant l'un des réactifs coopérant avec lesdites électrodes contiguës.

2. Pile à combustible selon la revendication 1, caractérisée par ceci que les électrodes dirigées l'une vers l'autre de chaque générateur élémentaire forment une chambre fermée (35) avec le cadre intercalaire, cette chambre étant alimentée en l'un des fluides réactifs par deux groupes de canaux (24-25) creusés dans les montants du cadre intercalaire (7).

3. Pile à combustible selon la revendication 1, caractérisée par ceci que les électrodes intérieures contiguës (2-2') de chacune des deux paires associées dans un générateur élémentaire sont réunies sur leurs bords de manière à former une chambre fermée (32), dont l'un au moins des bords réunis est enserré dans le cadre primaire (3) laissant passage par des tubulures convenables (23) à un flux de réactif provenant à travers le cadre primaire de canaux de circulation (21) creusés dans les montants du cadre intermédiaire.

4. Pile à combustible selon l'une quelconque des revendications précédentes, caractérisée par ceci que les électrodes extérieures (1-1'), situées de part et d'autre d'électrodes contiguës (2-2'), selon la revendication 3, sont réunies sur l'un de leurs bords de manière à former une doublure cavalière chevauchant la première chambre fermée (32), formée par les électrodes contiguës (2-2'), et espacée d'elle, les bords réunis étant enserrés dans le cadre primaire (3) du côté opposé à celui ou ceux enserrant le bord ou les bords de la première chambre.

5. Pile à combustible selon la revendication 4, caractérisée par ceci que des entretoises (8) sont disposées entre les extrémités des électrodes intérieures et extérieures d'un générateur élémentaire, ces entretoises ayant des ouvertures (9) pour la circulation des fluides à l'intérieur des chambres (32-33) délimitées par les électrodes entre elles, entretoises destinées à maintenir l'espacement entre électrodes à l'encontre des efforts de serrage pour l'assemblage de la pile.

6. Pile à combustible selon l'une quelconque des revendications précédentes, caractérisée par ceci que l'espace compris entre électrodes extérieures (1-1') et électrodes intérieures (2-2'), formant des chambres (31) en communication à travers les entretoises (8) avec des chambres (33) constituées entre deux cadres intercalaires et le cadre primaire enserré entre eux, est alimenté en électrolyte par des canaux d'arrivée (11) et de sortie (12).

7. Pile à combustible selon l'une quelconque des revendications précédentes, caractérisée par ceci que les faces en appui des cadres primaires et des cadres intermédiaires sont rendues étanches par des joints serrés (10) entre ces cadres.

8. Pile à combustible selon l'une quelconque des revendications précédentes, caractérisée par ceci que les diverses chambres (31, 32, 35) délimitées par les électrodes contenant respectivement l'électrolyte et les premier et deuxième réactifs contiennent une matière intercalaire permettant le passage du fluide et son contact avec les électrodes, tout en assurant le maintien en forme des chambres à l'encontre du pressage exercé pour l'assemblage.

9. Pile à combustible selon l'une quelconque des revendications précédentes, caractérisée par ceci que les cadres intercalaires présentent des faces de contact planes, étanches, avec les cadres primaires des générateurs de base qu'ils alimentent en produits réactifs et en électrolyte par des canaux appropriés, et qu'ils pressent de façon étanche sur les électrodes extérieures en appui contre les entretoises pour former les compartiments (33) réservés au second réactif de la pile.

10. Pile à combustible selon l'une quelconque des revendications précédentes, caractérisée par ceci que les cadres intercalaires comportent des passages destinés aux liaisons électriques entre deux générateurs de base contigus.

11. Pile à combustible selon l'une quelconque des revendications précédentes, caractérisée par ceci que les cadres intercalaires comportent deux jeux de canaux longitudinaux s'étendant parallèlement dans des premiers montants de cadre, deux canaux (21-24) dans un même montant (7) alimentant respectivement en premier et en second réactif, la chambre (32) entre électrodes intérieures d'une part et la chambre (35) entre deux électrodes extérieures contiguës d'autre part, une paire de canaux parallèles (22-25) prévus dans le montant parallèle opposé du cadre servant au retour desdits réactifs, alors qu'un jeu de canaux pour l'alimentation en électrolyte de l'espace entre électrodes intérieures et extérieures est prévu dans les montants des cadres intercalaires reliant lesdits premiers montants.

12. Pile à combustible selon l'une quelconque des revendications précédentes, caractérisée par ceci que l'électrolyte circule de bas en haut et les réactifs de gauche à

0061942

droite    inversement.

13. Pile à combustible selon l'une quelconque des revendications précédentes, caractérisée par ceci que les canaux d'électrolyte noyés dans les cadres intercalaires raccordés d'un cadre au suivant aux extrémités de ceux-ci et de façon alternée par des canalisations perpendiculaires, le passage à travers le générateur élémentaire de base étant isolé et le circuit général de l'électrolyte formant une grecque rectangulaire.

14. Pile à combustible selon l'une quelconque des revendications précédentes, caractérisée par ceci que le cadre de base est constitué de deux moitiés symétriques séparées par un plan parallèle aux électrodes, les pièces étant en plastique injecté et soudées sans autre usinage, notamment par vibrations ou ultrasons.

15. Pile à combustible selon l'une quelconque des revendications précédentes, caractérisée par ceci que les intercalaires et les entretoises de serrage sont d'un seul tenant et moulées en butyl.

1/4

<u>FIG.1</u>

FIG.2

# FIG.3

FIG.4

FIG.5

**Office européen des brevets**

## RAPPORT DE RECHERCHE EUROPEENNE

EP 82 40 0271

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | US - A - 3 589 941 (J.J. EATON et D.W. TSCHIDA) <br><br> * figures 1,2,3; colonne 3, ligne 28 - colonne 4, ligne 2; colonne 5, lignes 7-20; colonne 6, ligne 73 - colonne 7, ligne 17 * <br><br> -- | | H 01 M 8/24 |
| A | FR - A - 2 169 758 (INSTITUT FR. DU PETROLE DES CARBURANTS ET LUBRIFIANTS) <br><br> * figure 2; page 6, lignes 18-23* <br><br> -- | | **DOMAINES TECHNIQUES RECHERCHES (Int. Cl. ³)** |
| A | GB - A - 2 006 101 (ELEKTRO-CHEMISCHE ENERGIE CONVERSIE) <br><br> * revendication 1; figure 5 * <br> & FR - A - 2 406 313 <br><br> ----------- | | H 01 M 8/24 <br> 8/00 <br> 8/08 |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-05-1982 | D'HONDT |

OEB Form 1503.1   06.78